# EUROPEAN PATENT APPLICATION

(11) **EP 0 704 337 A2**
(43) Date of publication of application: **03.04.1996**
(21) Application number: 95306844.2
(22) Date of filing: 28.09.1995
(51) Int. Cl.: B60L 11/18, B60L 3/00, B60L 7/10

(54) **A control apparatus for an electric automobile**

(30) Priority: 29.09.1994 JP 235662/94
(71) Applicant: SEIKO EPSON CORPORATION, Tokyo 163 (JP); TOKYO R&D CO., LTD., Tokyo 106 (JP)
(72) Inventor: Tabata, Kunio, c/o Seiko Epson Corporation, Suwa-shi, Nagano-ken 392 (JP); Kozaki, Minoru, c/o Seiko Epson Corporation, Suwa-shi, Nagano-ken 392 (JP)
(74) Representative: Sturt, Clifford Mark

(57) **Abstract**

A control apparatus of the present invention provides an improved travelling performance. It may comprise one or more of a travelling control apparatus by which a duty ratio in consideration of how storage cells (11) are consumed is set to ensure a steady travelling feeling, a regeneration brake which can produce stable braking forces regardless of how storage cells (11) are consumed, and a protective device by which a plurality of operation stop levels are set to be able to cancel an unwanted stop operation and to ensure reliable alarming. In a travelling control apparatus for an electric automobile (1) a chopper duty ratio is compensated depending on how storage cells are consumed, to provide a steady agreeable travelling feeling. In a regeneration brake, regenerated electric power is consumed by a motor driving circuit (13) to stabilise operation of a regeneration brake regardless of how storage cells (11) are consumed, and improve performance thereof. In a protective device for grasping an operating condition of equipment, issuing an alarm in the event of abnormality, and stopping operation of the equipment, the stop operation is effected in two steps and a cancel switch for cancelling the stop operation in the first step is provided to, depending on situations, cancel the stop operation forcibly effected by the protective device.

## Description

The present invention relates to a control apparatus used in electric automobiles and to devices making up such a control apparatus, namely a travelling control apparatus, a regeneration brake and a protective device. In particular it relates to a control apparatus and to devices for achieving an improvement in overall travelling performance.

Recently, attention has been focused on electric automobiles, propelled by the use of electric motors for travelling, as next-generation vehicles to be substituted for gasoline automobiles using internal combustion engines. It is expected that electric automobiles travelling by clean electrical energy can basically solve environmental problems such as detrimental exhaust gas and noise of automobiles. The exhaust gas from gasoline automobiles is said to be responsible for air pollution in percentage of about 70 %. Also, the substitution of gasoline automobiles with electric ones, may result in the life of petroleum resources being at least doubled.

The electric automobile has road wheels suspended from a vehicle body through shock absorbers, as with a conventional automobile, and includes, as an electric power system, a battery power supply made up of a plurality of storage cells, an electric motor for travelling, a motor driving circuit for controlling rotation of the motor, and a control circuit for instructing control commands to the motor driving circuit. The driving force generated by the motor is transmitted through a power transmitting apparatus to drive a road wheel for travelling a vehicle in a similar manner to in a conventional automobile.

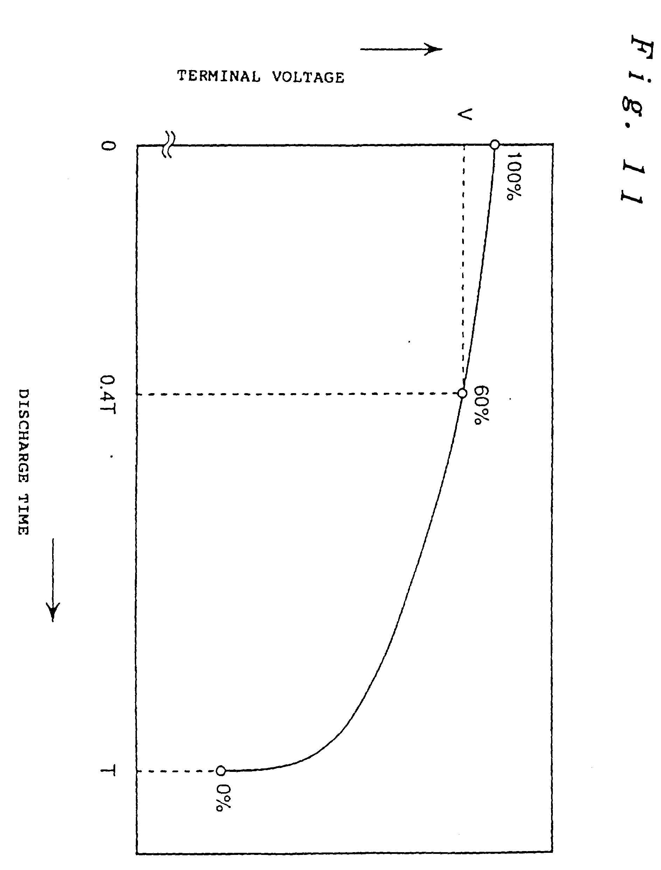

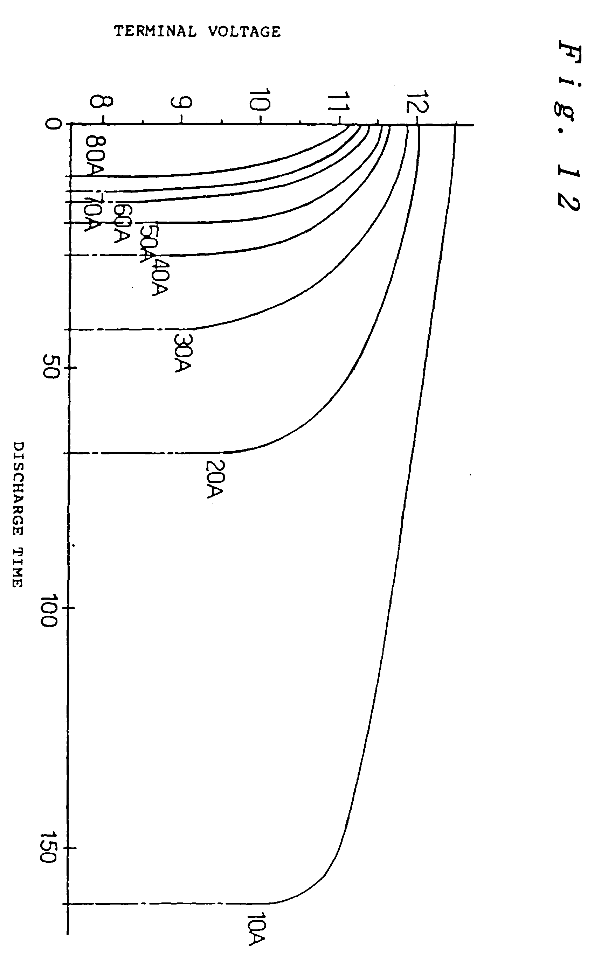

The battery power supply for supplying electric power to the travelling motor is made up of a plurality of storage cells connected in series, so as to provide a required voltage. The storage cells each have a characteristic as follows. With the elapse of time during which the storage cell is discharged in use, the terminal voltage of the battery cell gradually decreases until it reaches the final voltage. Figure 11 of the accompanying drawings shows a discharge curve indicating the decrease in terminal voltage over a period of time. When reaching the final voltage, no current flows from the storage cell for protection of the storage cell. It is also known that, as shown in Fig. 12 of the accompanying drawings, that the discharge curve depends on currents supplied in use, and that changes in the supplied current vary the time during which the storage cell can be continuously discharged. Therefore, an electric automobile includes a remaining capacity meter for accurately grasping, based on any of various methods, the amount of electric energy remaining in the storage cell while the electric automobile is travelling.

The electric power from the power supply is supplied through the motor driving circuit, which performs chopper control to increase or decrease an effective voltage supplied to the motor for controlling the rotational speed of the motor. A chopper duty ratio for control of the effective voltage is commanded from the control circuit, which is electrically connected to an accelerator grip or the like of a manipulation device. In other words, depending on the opening degree of the accelerator set by a driver operating the manipulation device, the control circuit sets a duty ratio for the chopper control and outputs it to the motor driving circuit. Thus, in accordance with an increase or decrease in the opening degree of the accelerator set by the driver, the control circuit sets a duty ratio for the chopper control and, based on this duty ratio, the motor driving circuit increases or decreases the effective voltage supplied to the motor, thereby providing the rotational speed of the motor corresponding to the opening degree of the accelerator.

Further, in place of an engine brake conventionally effected by an internal combustion engine, an electric automobile generally employs a regeneration brake which is effected by using the electric motor for travelling as a dynamo. The regeneration brake serves as an auxiliary brake such that kinetic energy to be reduced when the electric automobile decelerates or travels down over a slope, is converted into electrical energy by temporarily using the electric motor for travelling as a dynamo. Then, it is also customary to charge the storage cells with the regenerated electric power for the recovery of energy.

Moreover, an electric automobile is generally loaded with various protective devices for protecting equipment. Specifically, the protective device comprises a sensor provided on each relevant piece of equipment for measuring, for example, a temperature, a voltage or so, and determination means for comparing a sensor value with an evaluation reference level, i.e., an alarm/stop level, and determining the operating condition of the equipment. When the first alarm level is detected, it is judged that the equipment has come close to the limit for use, and an alarm is indicated on a display panel or the like to inform the driver of the judgement. When the second stop level is detected, it is judged that the equipment has reached the limit for use, and the operation of the equipment is stopped.

With motor control practised in conventional electric automobiles, however, because the chopper duty ratio is set in proportion to the opening degree of the accelerator, there has been a drawback that the accelerating ability of the electric automobile is different depending on how power from the storage cells is consumed and also that acceleration whilst travelling feels unsteady. These drawbacks are attributable to the fact that although the terminal voltage is lowered with the consumption of power from the storage cells. the duty ratio is set at a value depending on the opening degree of the accelerator, regardless of how the storage cells are consumed. Therefore, the effective voltage supplied to the motor is reduced, resulting in differences in the accelerating ability and so on.

Also, with the regeneration brake used in conventional electric automobiles, because the amount of chargeable electric power is varied depending on how power from the storage cells is consumed, there has been a problem that the regenerated electric power can not often be recovered to the storage cells. Consequently, regenerative braking forces are reduced, and safety during travelling of electric automobiles is impaired. To solve the problem, it has been proposed to introduce the surplus electric power, that cannot be recovered to the storage cells, to a large-sized resistor disposed outside the automobile compartment. In this way heat would be generated from the resistor and then dissipated to open air, thus consuming the surplus electric power. An alternative proposal is to drive a flywheel by an electric motor using the regenerated electric power for storing the surplus electric power in the flywheel as mechanical energy. However, neither such methods are preferred, since the total weight of the automobile is increased. extra mounting space is required, and the structure is complicated.

Additionally, with the conventional protective device, because operation of the equipment can still be continued after an alarm has been issued from the protective device, there has been a fear that the driver may continue operating the equipment and that the equipment may abruptly be stopped in unwanted situations. This means that when the protective device is to monitor a temperature condition of the travelling motor, by way of example, the automobile may stall in a place where it should not be stopped, such as an intersection or a railroad crossing. Further, for a protective device arranged such that the motor operation ability is lowered in the alarm stage, there accompanies a serious risk because the travelling speed is reduced and it takes a time to move away from the improper place.

Moreover, because an alarm issued from the protective device is conventionally indicated on a display panel to inform the driver of the situation, there has been a fear that the driver cannot visually realise the alarm and cannot recognise it in certain traffic situations due to the surroundings and/or running conditions. In electric motorcycles such as scooters, particularly, that tendency is increased due to the relationship between the position of the display panel and the range of view of the driver.

It is an object of the present invention to provide a travelling control apparatus which ensures a steady travelling feeling.

It is another object of the present invention to provide a regeneration brake which can produce stable braking forces regardless of how power from storage cells is consumed.

It is a further object of the present invention to provide a protective device which ensures reliable alarming, and which enables unwanted stopping of the vehicle to be overcome.

It is yet a further object of the present invention to provide a control apparatus for an electric automobile which provides an improved overall travelling performance.

According to one aspect of the present invention, there is provided a control apparatus for an electric automobile having a motor, an accelerator, and storage cells for supplying electric power, the control apparatus comprising: a travelling control apparatus comprising a motor driving circuit for controlling rotation of the motor by performing chopper control, and a control circuit for setting the duty ratio for chopper control in accordance with the condition of the accelerator; a regeneration brake comprising a motor driving circuit for acting as dynamo and returning electric power regenerated by the motor to the storage cells; and a protective device comprising an alarm, a detector for detecting changes in a physical variable due to operation of loaded equipment and outputting a detection signal representative of such a change, and a control circuit for actuating the alarm when the detection signal reaches a predetermined alarm level and for stopping the equipment when the detection signal reaches a predetermined stop level; characterised in that: the motor driving circuit of the travelling control apparatus further adjusts the duty ratio for chopper control, in accordance with terminal voltage of the storage cells, such that a constant effective voltage for application to the motor is maintained; the motor driving circuit of the regeneration brake determines the remaining capacity of the storage cells and the regeneration brake further comprises a control circuit for controlling its motor driving circuit in accordance with a comparison between the electric power regenerated by the motor and the remaining capacity of the storage cells, such that any surplus regenerated electric power is consumed by its motor driving circuit; and the protective device further comprises means for overriding the stopping of the equipment when the detection signal reaches the predetermined stop level and its control circuit is arranged to stop the equipment when the detection signal reaches a further predetermined stop level.

According to another aspect of the present invention, there is provided travelling control apparatus for an electric automobile having a motor, an accelerator, and storage cells for supplying electric power, the travelling control apparatus comprising: a motor driving circuit for controlling rotation of the motor by performing chopper control; and a control circuit for setting the duty ratio for chopper control in accordance with the condition of the accelerator; characterised in that the motor driving circuit further adjusts the duty ratio for chopper control, in accordance with terminal voltage of the storage cells, such that a constant effective voltage for application to the motor is maintained.

According to a further aspect of the present invention, there is provided a regeneration brake for an electric automobile having a motor, and storage cells for supplying electric power, the brake comprising:
a motor driving circuit for controlling rotation of the motor, acting as a dynamo and returning electric power regenerated by the motor to the storage cells; characterised in that: the motor driving circuit determines the remaining capacity of the storage cells; and the regeneration brake further comprises a control circuit for controlling the motor driving circuit in accordance with a comparison between the electric power generated by the motor and the remaining capacity of the storage cells, such that any surplus regenerated electric power is consumed by the motor driving circuit.

According to yet another aspect of the present invention, there is provided a protective device for an electric automobile comprising: an alarm; a detector for detecting changes in a physical variable due to operation of loaded equipment and outputting a detection signal representative of such a change; and a control circuit for activating the alarm when the detection signal reaches a predetermined alarm level and for stopping the equipment when the detection signal reaches a predetermined stop level; characterised in that: the protective device further comprises means for overriding the stopping of the equipment when the detection signal reaches a predetermined stop level; and the control circuit is arranged to stop the equipment when the detection signal reaches a further predetermined stop level.

According to a still further aspect of the present invention, there is provided a control apparatus for an electric automobile comprising the aforementioned travelling control apparatus and/or regeneration brake and/or protective device.

In one embodiment a travelling control apparatus for an electric automobile comprises an electric motor for travelling driven by electric power supplied from storage cells, and a motor driving circuit for controllably rotating the motor by increasing or decreasing a duty ratio in chopper control, the motor driving circuit receiving an instruction of the duty ratio corresponding to the opening degree of an accelerator set by a driver, wherein the travelling control apparatus includes duty ratio setting means for, based on both a terminal voltage of the storage cells and the opening degree of the accelerator, increasing the duty ratio depending on a reduction in the terminal voltage so that an effective voltage supplied to the motor is kept the same as supplied at the equal opening degree of the accelerator in a fully charged condition of the storage cells.

In another embodiment, a regeneration brake for an electric automobile comprises an electric motor for travelling driven by electric power supplied from storage cells, a motor driving circuit for controllably rotating the motor through chopper control, and regenerative braking means using the motor as an electric dynamo temporarily while the automobile is decelerated, for charging the storage cells with regenerated electric power, wherein the regeneration brake comprises regeneration determining means for determining whether the storage cells can be charged with the regenerated electric power or not based on the amount of electric power regenerated by the regeneration brake and the amount of electric power chargeable to the storage cells when the regenerative braking operation is effected, and electric power consuming means for distributing the surplus regenerated electric power to the motor driving circuit based on determination by the regeneration determining means that the storage cells are no more chargeable, so that the surplus regenerated electric power is consumed by the motor driving circuit.

In a further embodiment, protective device for an electric automobile comprises a sensor for detecting changes in a physical variable depending on operation of a loaded equipment, comparison/determination means having determination reference values at a first alarm level and a second stop level, comparing an output of the sensor with the reference level values, and determining an operation level of the equipment, alarm means for informing a driver of abnormality of the equipment based on determination of the first alarm operation level made by the comparison/determination means, and stop means for stopping operation of the equipment based on determination of the second stop operation level made by the comparison/determination means, wherein the comparison/determination means includes a third stop determination level in addition to the second stop determination level, the operation of the equipment is stopped upon determination that any of the second and third stop determination levels is reached, and a cancel switch is provided for cancelling the operation of stopping the equipment effected for the first time upon determination that the second stop determination level is reached.

With the travelling control apparatus for electric automobiles of the present invention, the duty ratio may be increased depending on a reduction in the battery terminal voltage based on both the terminal voltage and the opening degree of the accelerator so as to supply the same effective voltage to the motor for maintaining the motor output power at a constant value regardless of how the battery is consumed. This enables a driver to always perceive a steady agreeable travelling feeling.

With the regeneration brake for electric automobiles of the present invention, the motor driving circuit intrinsically loaded on the electric automobile is controlled to consume electric power by itself so that the motor driving circuit can perform the operation of consuming electric power when the electric power cannot be returned to the battery. Therefore, the regenerative braking forces can surely be maintained and reliability of the regeneration brake can be improved regardless of how the battery is consumed. In other words, electric power can be consumed by controlling the motor driving circuit which is usually loaded on the electric automobile, without requiring a dedicated circuit for consuming surplus electric power. As a result. the weight and the space additionally required for the dedicated circuit are no longer necessary, complication of the brake structure can be prevented, and the cost can be cut down. Further, since the motor driving circuit may have switching devices which are intrinsically formed of large-sized devices for the purpose of motor driving and provided with means for ensuring a sufficient degree of heat radiation, the motor driving circuit can double as a circuit for consuming surplus electric power with no problems.

With the protective device for electric automobiles of the present invention, a new preliminary stop operation is added to the alarm/stop operation of a conventional protective device, and a cancel switch is provided to override the preliminary stop operation for cancelling the stop operation effected for the first time by the protective device if required. Therefore, if the equipment is continuously operated in disregard of an alarm issued by the protective device and the operation of the equipment is stopped for the first time by the protective device, the stop operation by the protective device can be cancelled, allowing the driver to continue the operation of the equipment so that the equipment is prevented from being stopped in unwanted situations. For example, when the protective device is to monitor a temperature condition of the travelling motor, the automobile can be prevented from stalling in a place where it should not be stopped, such as an intersection or a railroad crossing. In this respect, since the motor operation ability is not lowered in the stage of alarm /stop operation, the travelling speed is maintained and the driver can quickly move the automobile away from the improper place for higher safety.

Additionally, when an alarm issued by the protective device is informed to the driver through vibrations of a vibrating alarm unit, the alarm can surely be transmitted to the driver of even an electric motorcycle such as a scooter regardless of traffic situations in the surroundings and/or running conditions, resulting in improved safety.

Embodiments of the present invention will now be described with reference to the accompanying drawings, of which:

Fig. 1 is a side view schematically showing the construction of an electric motorcycle as one kind of electric automobile of the present invention.

Fig. 2 is a block diagram for explaining a motor power apparatus in the electric motorcycle according to an embodiment of the present invention.

Fig. 3 concerns a travelling control apparatus for an electric automobile according to an embodiment of the present application, and is a graph illustrating setting a duty ratio from the terminal voltage of storage cells.

Fig. 4 concerns a travelling control apparatus for an electric automobile according to an embodiment of the present application, and illustrating setting a duty ratio from the terminal voltage of storage cells and the opening degree of an accelerator.

Fig. 5 concerns s travelling control apparatus for an electric automobile according to an embodiment of the present application, and is a table for setting a duty ratio from the terminal voltage of storage cells and the opening degree of an accelerator.

Fig. 6 is a diagram schematically showing the configuration of a regeneration brake for an electric automobile according to an embodiment of the present invention.

Fig. 7 is an equivalent circuit diagram of the embodiment of the present invention shown in Figure 6.

Fig. 8 concerns a protective device according to an embodiment of the present invention, and is a graph showing the relationship between motor temperature and comparative reference values.

Fig. 9 concerns a protective device for electric automobiles of an embodiment of the present invention, and is a circuit diagram schematically showing a device configuration.

Fig. 10 concerns the protective device of an embodiment of the present invention, and is a schematic vertical sectional view showing a vibration alarm device.

Fig. 11 is a graph showing a typical discharge characteristic of a storage cell when a constant current is discharged.

Fig. 12 is a graph showing the relationship between current values discharged from a battery and chargeable capacity of the battery.

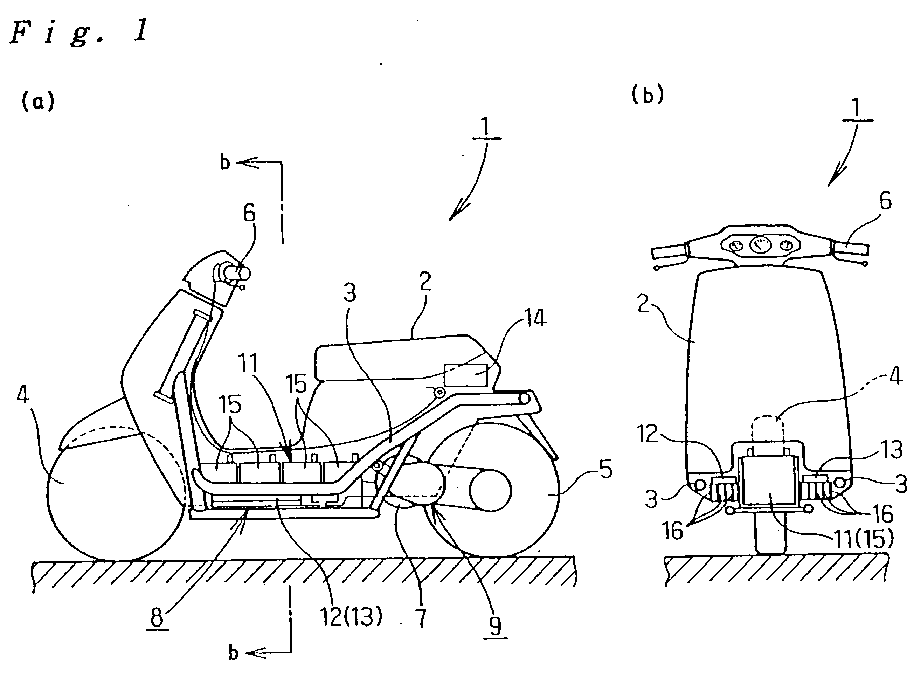

The present invention will hereinafter be described in connection with embodiments shown in Figs. 1 to 10. An electric automobile in the illustrated embodiments is, as shown in Fig. 1, an electric motorcycle as one kind of electric automobiles. The following description in this specification will be made, taking an electric motorcycle (such as a scooter) merely as an example. Basic arrangements common to the various embodiments of this invention will first be explained before describing the specific embodiments in detail.

An electric motorcycle 1 includes road wheels 4, 5 positioned respectively in front and rear parts of a vehicle body 2 and suspended from a main frame 3 of the vehicle body, as with a conventional motorcycle driven by an engine. The front wheel 4 is steered by a handle 6, and the rear wheel 5 is driven by not an engine, but an electric motor 7 for travelling.

The main frame 3 mounts thereon an electric power apparatus 8 for supplying electric power to propel the motorcycle for travelling, and a power transmitting apparatus 9 for converting the electric energy supplied from the electric power apparatus 8 into mechanical movement by the electric motor 7 and transmitting rotation of the motor to the rear wheel. Other parts, such as an accelerator grip provided on the handle 6, brake levers, brake mechanisms and suspensions, some of them being not shown, are basically the same as those used in conventional motorcycles. The accelerator grip and the brake levers are electrically connected to the electric power apparatus.

The electric power apparatus 8 comprises a battery power supply 11 mounted in a low-level position substantially centrally of the main frame 3 of the vehicle body 2, a charger 12, a motor driving circuit 13 and a control circuit 14 which are disposed in respective places inside the vehicle body 2, and various sensors provided respectively on relevant equipment loaded on the motorcycle. These control/driving circuits of the electric power apparatus 8 supply, to the travelling motor 7, driving electric power in accordance with a demand instructed upon operation by a driver, thereby propelling the electric motorcycle to advance at a demanded speed.

The battery power supply 11 is made up by a plurality of storage cells 15 fixed to the frame through a bracket. In the electric motorcycle 1 of this embodiment, the battery power supply 11 is made up by four storage cells 15, 15... which are connected in series by large-diameter cables to produce a predetermined value of voltage while preventing transmission loss of a large amount of electric power.

The motor driving circuit 13 is primarily constituted by a circuit comprising MOSFETs which are high-speed switching devices for large electric power. Chopper control is made by switching operation of the FET circuit to increase or decrease an effective voltage supplied to the motor for controlling a rotational speed of the motor. On the vehicle body 2 right under the motor driving circuit 13, large-sized heat radiating plates 16 are provided to dissipate the large amount of heat generated with the switching operation of the motor driving circuit 13 to open air, thereby achieving a sufficient degree of heat radiation.

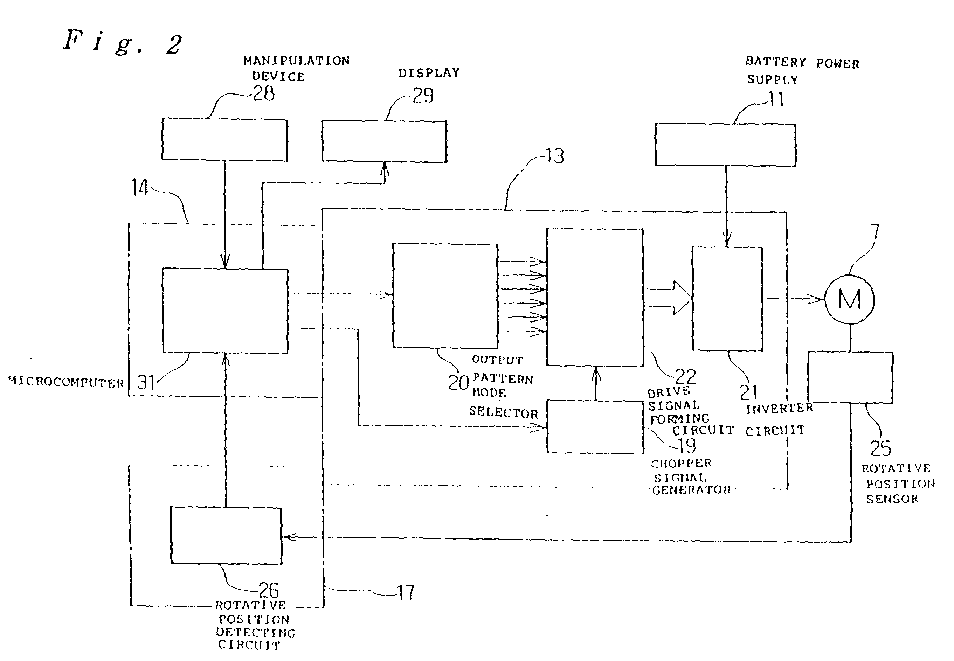

The electric power apparatus 8 thus controlling and driving the electric motor 7 for travelling comprises, as shown in Fig. 2, a detector 17 for detecting the condition of rotation of the travelling motor 7 and collecting information on the rotational position of the motor 7 for use in rotation control, the battery power supply 11 for supplying electric power to the motor 7, the motor driving circuit 13 for providing chopper control of the supplied electric power in accordance with a setting signal from the control circuit 14 and supplying it to the motor at the proper timing and with the proper amount of electric power, and the control circuit 14 for receiving a control signal issued as a consequence of the driver operating a manipulation device and a detection signal from the detector 17 and outputting a command to control the motor driving circuit 13 based on the signals input.

The motor driving circuit 13 comprises a chopper signal generator 19 for changing a chopper signal and changing the duty ratio to a set value based on a duty ratio setting signal from the control circuit 14, an output pattern mode selector 20 for selecting a commutation mode and outputting it based on a commutation signal from the control circuit 14, a drive signal forming circuit 22 for, based on the selected commutation mode, outputting signals to effect on/off switching operation of transistors of an inverter circuit 21, and the inverter circuit 21 connected to the battery power supply 11 for, based on the above signals from the circuit 22, switching the transistors to supply excitation currents to respective coils of the motor in the switched condition. Specifically, based on the commutation signal output from the control circuit 14 at the proper timing, the output pattern mode selector 20 outputs a next excitation pattern mode. Then, based on this pattern mode, the drive signal forming circuit 22 outputs signals for switching the transistors of the inverter circuit 21. In accordance with the selected mode, the inverter circuit 21 supplies excitation currents to respective coils of the motor in the switched condition, whereupon the motor 7 is driven. Further, the chopper signal generator 19 generates a chopper signal and outputs it to the drive signal forming circuit 22 based on both a chopper switching command and a duty ratio setting signal for designating the rotational speed of the motor which are issued from the control circuit 14.

The detector 17 comprises a rotational position sensor 25 formed of a Hall device or the like provided on the motor 7 for detecting the rotational position of the motor 7, and a rotational position detecting circuit 17 for determining the rotational position of a motor rotor based on a sensor signal and outputting it to the control circuit 14.

The control circuit 14 is constituted by a microcomputer 31 which is connected to a manipulation device 28, a display 29, and various sensors provided respectively on relevant equipment loaded on the motorcycle. The microcomputer 31 comprises an A/D converter for converting analog input signals into digital signals, I/O ports, a CPU, memories, etc. and outputs a control command for proper operation, such as a duty ratio setting signal, to the motor driving circuit 13 based on a demanded value from the manipulation device and detection signals from the various sensors. Embodiments of the travelling control apparatus and regeneration brake may be realised by setting programs stored in the microcomputer 31 of the control circuit 14 such that the motor is operated to produce constant output power and regenerative braking forces regardless of the remaining capacity of the storage cells.

In other words, the travelling control apparatus of the present invention is intended to prevent variations in travelling performance of electric automobiles caused by a reduction in the battery discharge voltage and the motor driving forces are reduced due to consumption of the battery, for example, while the electric automobile is travelling. This is achieved by increasing the duty ratio corresponding to a reduction in the battery terminal voltage based on both the terminal voltage and in a preferred embodiment, the opening degree of the accelerator, so that the same effective voltage is supplied to the motor to maintain the motor output power at a constant level regardless of how the battery is consumed, thereby providing an agreeable steady travelling feeling at all times.

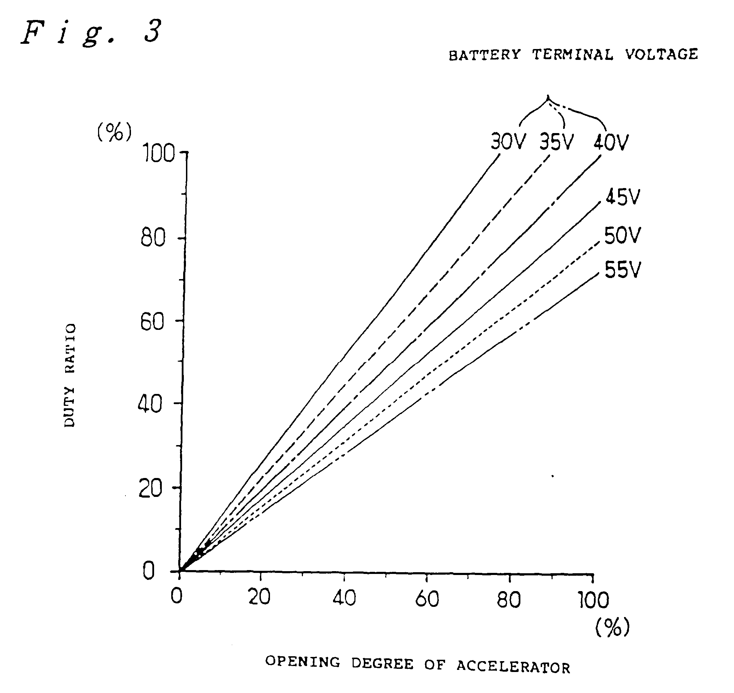

An embodiment of the travelling control apparatus for electric automobiles according to the present invention will be described below with reference to Fig. 3. In the travelling control apparatus of this embodiment, the duty ratio is calculated using one of the calculation formulae set for each value of the opening degree of the accelerator and the battery terminal voltage, which is selected depending on the measured terminal voltage. Specifically, the calculation formulae are linear equations each representing a gradient for each of the terminal voltages as shown in Fig. 3, and the one of the linear equations closest to the actually measured terminal voltage is selected for calculating the duty ratio. Also, the voltage lines are defined with one of them representing 40 V as a reference. That is, the voltage line of 40 V is set to have a proportional relationship between the opening degree (%) of the accelerator and the duty ratio (%), and the other voltage lines are set to maintain that relationship. Specifically, for each of the other voltage lines. the product of the voltage value (V) and the duty ratio at the respective opening degree of the accelerator is always the same as the product of 40 V and the duty ratio at the same opening degree of the accelerator.

For example, when the terminal voltage of the storage cells is lowered from 45 V to 40 V while the electric motorcycle is travelling at a full speed with the opening degree of the accelerator being set to 100 %, the duty ratio is increased from 89 % to 100 %. With the increased duty ratio, the effective voltage supplied to the motor is kept constant regardless of a reduction in the terminal voltage of the storage cells, thereby maintaining the same travelling performance. Also, at the terminal voltage of the storage cells in excess of 40 V, the duty ratio is continuously linearly varied depending on changes in the opening degree of the accelerator over an entire range of the opening degree of the accelerator so that the driver can always perceive a steady travelling feeling regardless of how the battery is consumed.

With this embodiment, as described above, the duty ratio is increased depending on a reduction in the battery terminal voltage based on both the terminal voltage and the opening degree of the accelerator so as to supply the same effective voltage to the motor for maintaining the motor output power at a constant value regardless of how the battery is consumed. This makes it possible for the driver to always perceive a steady agreeable travelling feeling. Also, since the duty ratio is calculated by using calculation formulae defined for respective voltage values rather than using a table in which discrete values are stored, the required memory capacity can be reduced. Further, since the duty ratio itself is continuously varied depending on the opening degree of the accelerator by using the calculation formula, the travelling feeling is expected to be further improved.

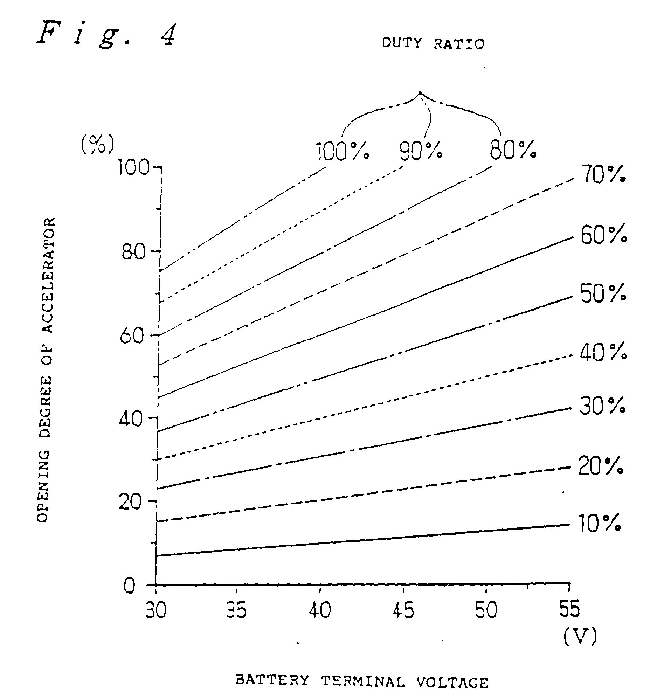

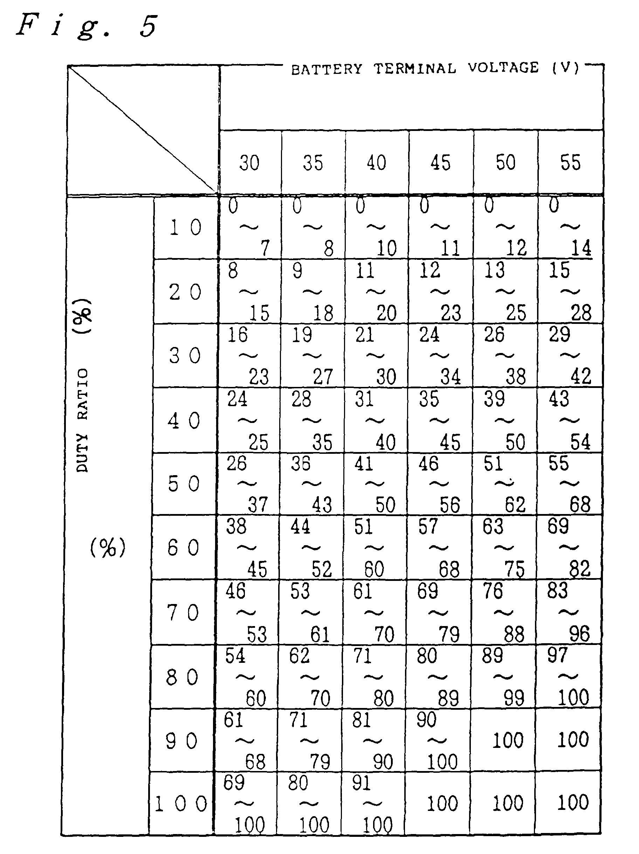

Another embodiment of the travelling control apparatus will now be described with reference to Figs. 4 and 5. In a travelling control apparatus for electric automobiles of this embodiment, the above-mentioned basic graph shown in Fig. 3 is modified into a range graph in which the battery terminal voltage and the opening degree of the accelerator are plotted for each value of the duty ratio as shown in Fig. 4. Based on this range graph, a table shown in Fig. 5 is prepared. Then, the table is stored in a memory of the control circuit and the duty ratio for controlling the rotational speed of the motor is determined by referring to the table. In other words, as with the above embodiment, the duty ratio is set based on both the terminal voltage of the storage cells and the opening degree of the accelerator by referring to the table.

The range graph of Fig. 4 is intended to, from the basic setting graph of Fig. 3 used in the above embodiment, show boundary regions for changing the duty ratio in the relationship between the terminal voltage of the storage cells and the opening degree of the accelerator.

In the table prepared from the range graph, divisions for values of the terminal voltage measured during use of the battery are set along the horizontal axis, and divisions for values of the duty percentage instructed by the motor driving circuit are set along the vertical axis. Then, each section, delimited in terms of the voltage value and the percentage value, represents a range of the opening degree of the accelerator which is determined from the range graph of Fig. 4 as satisfying the duty percentage condition necessary to supply the same effective voltage to the motor at the respective voltage values. While the electric motorcycle is travelling using the battery, the duty ratio is set by looking up in the table, both the opening degree of the accelerator instructed by the driver and the value of the battery terminal voltage at that time. More specifically, based on the battery terminal voltage measured, the corresponding column of battery terminal voltage in the table is determined. Then, from among the ranges of the opening degree of the accelerator shown in respective sections belonging to the determined row, the section including the opening degree of the accelerator instructed at that time is determined. Finally, the row of duty percentage corresponding to the determined section is determined to set the duty ratio. For example, when the terminal voltage of the storage cells is lowered from 50 V to 45 V while the electric motorcycle is travelling at a high speed with the opening degree of the accelerator being set to 90 %, the duty ratio is increased from 80 % to 90 %. With the increased duty ratio, the effective voltage supplied to the motor is kept constant regardless of a reduction in the terminal voltage of the storage cells, thereby maintaining the same travelling performance.

While each of the sections making up the table of this embodiment is given by the range of the opening degree of the accelerator satisfying the comparative determining condition, the present invention is not limited to the illustrated embodiment. The comparative determining condition may be modified to define the range of each section by only an upper or lower limit value. In this modified case, the total amount of data can be reduced and the required memory can be reduced.

With this embodiment, as described above, the duty ratio is set by using the table. In addition to the similar advantage as in the above first embodiment, therefore, the travelling performance of electric automobiles can be improved providing the table with specific characteristics.

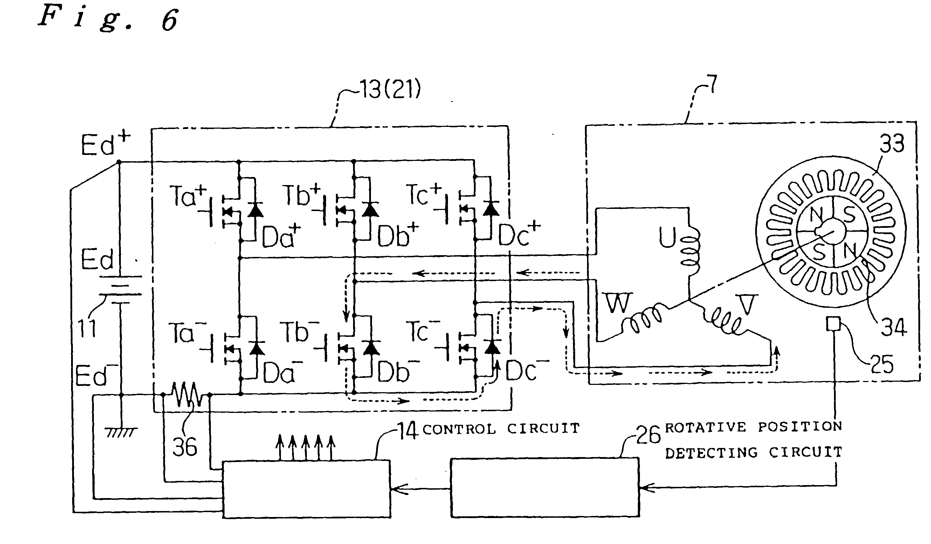

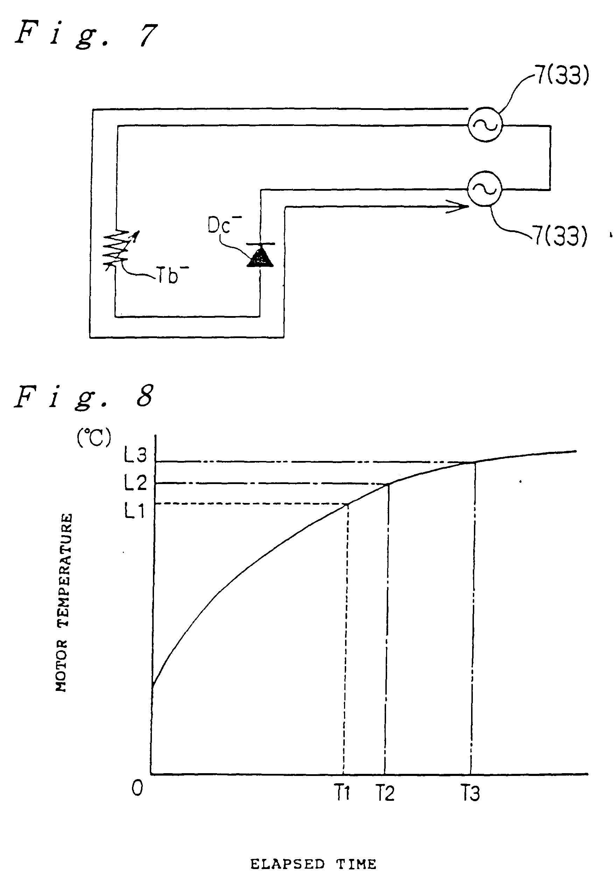

A regeneration brake for electric automobiles according to the present invention will now be described in connection with an embodiment shown in Figs. 6 and 7. In the regeneration brake of this embodiment, the operation of the motor driving circuit is controlled by using the above-explained basic arrangements so that the motor driving circuit consumes regenerated electric power to stably ensure regenerative braking forces regardless of how the storage cells are consumed.

More specifically, as shown in Fig. 6, the regeneration brake of this embodiment comprises the electric motor 7 for travelling, the battery power supply 11, the motor driving circuit 13, and the control circuit 14 as with the prior art. This embodiment is realised, similarly to the above mentioned one by programs stored in the microcomputer 31 of the control circuit 14.

The electric motor 7 for travelling is constituted by a brushless DC motor which comprises a stator 33 fixed to the vehicle body, and a rotor 34 rotatably disposed within the stator 33. Four sets of windings for each of 3-phase coils U, V, W are fitted over the stator 33, and the rotor 34 has four magnetic poles formed by permanent magnets.

The coils U, V, W of the stator 33 are separately connected to the inverter circuit 21 in the motor driving circuit 13 so that excitation currents are selectively supplied to respective coils. More specifically, the inverter circuit 21 comprises transistors Ta⁺, Tb⁺, Tc⁺ on the P (positive) side to which are reversely connected return diodes Da⁺, Db⁺, Dc⁺, respectively, and transistors Ta⁻, Tb⁻, Tc⁻ on the N (negative) side to which are reversely connected free-wheel diodes Da⁻, Db⁻, Dc⁻, respectively. These transistors are constituted by MOSFETs (metal-oxide-semiconductor field effect transistors) for achieving control of the high-speed switching operation of large currents. A drain-source current of each MOSFET is used as the current supplied to the electric motor. Then, a pair of transistors, one on the P side and one on the N side, are combined with each other and the switching operation of the paired transistors is controlled to perform chopper control for changing the duty ratio so that the effective voltage supplied to the motor coil is increased or decreased to control the rotational speed of the motor. At the same time, 3-phase DC currents are successively applied to a selected two of the 3-phase coils in switched manner, thereby forming magnetic fields for rotation to drive the rotor 34 continuously.

The rotational position of the motor rotor 34 is detected by the rotational position sensor 25 formed of Hall devices or the like, and the supply of currents to the motor coils is switched over at the proper timing in accordance with a detected sensor signal. Specifically, in response to the sensor signal, the rotational position detecting circuit 26 for determining the rotative position of the motor rotor 34 is connected to the control circuit 14 and, in response to a motor rotational position detected signal from the rotational position detecting circuit 26, the control circuit 14 selectively performs on/off operation of the transistors Ta, Tb, Tc of the inverter circuit 21 at the proper timing.

Incidentally, denoted by reference numeral 36 is a shunt resistor for measuring a charging/discharging current to and from the battery power supply 11. Based on the measured current, the control circuit 14 determines the remaining capacity of the battery power supply 11.

The inverter circuit 21 of the motor driving circuit 13 is employed as a booster for the counter electromotive voltage produced during normal regeneration. Specifically, when the counter electromotive voltage is produced in the W-phase coil at a certain point in time during the regeneration and a current flows as indicated by dotted lines in Fig. 6, the current is returned to the battery power supply through the free-wheel diode Db⁺ for regenerative charging of the battery by turning off the transistor Tb⁻after the elapse of a predetermined time from the generation of that current.

Further, by carrying out gate control of the transistors Ta, Tb, Tc of the inverter circuit 21 at the proper timing depending on the coils in which the counter electromotive voltage is induced, the electric power produced by the motor 7 can be consumed by the transistors Ta, Tb. Tc. During the regenerative operation, the regenerated current passes the transistor Tb⁻ and is returned to the motor 7 through the free-wheel diode Db⁻. By controlling the gate of the transistor Tb⁻ at this time, it is possible to consume the current.

More specifically, a gate voltage applied to the transistor Tb⁻ is adjusted so as to increase on-resistance of the transistor Tb⁻ for converting the current flowing between drain and source of the transistor Tb⁻ into heat for consumption. Thus, as shown in an equivalent circuit diagram of Fig. 7, the regenerated electric power is consumed by using the transistor Tb⁻ as a variable resistor. Note that the motor driving circuit is provided with means for ensuring a sufficient degree of heat radiation because it generates heat likewise during the normal switching operation to drive the motor. Therefore, even if the regenerated electric power is consumed by the inverter circuit, the circuit function will not be impaired.

Next, the operation of the regeneration brake will be described. When electric power is regenerated from the motor upon the electric motorcycle being braked, the control circuit compares the regenerated electric power and the chargeable amount of the storage cells and determines which one of them is greater. Then, the control circuit determines as to whether the motor driving circuit performs normal charging operation or the consuming operation.

First, when the regenerated electric power is not greater than the chargeable amount of the storage cells, the inverter circuit 21 in the motor driving circuit 25 is employed as a booster to perform the normal regenerative operation so that the storage cells are charged with the regenerated electric power.

Next, when the regenerated electric power is greater than the chargeable amount of the storage cells, the control circuit outputs a predetermined signal to the motor driving circuit which starts the operation of consuming the regenerated electric power by itself. Specifically, at the time the current flows through the transistor corresponding to the coil in which the counter electromotive voltage has been induced, the gate voltage applied to that transistor is adjusted so as to increase its on-resistance, thereby converting the current into heat for consumption.

While the chargeable amount of the storage cells in the regenerative braking operation is determined in this embodiment by directly measuring the terminal voltage of the storage cells, the present invention is not limited to the illustrated embodiment. The chargeable amount of the storage cells may be determined using a remaining capacity meter generally mounted on electric automobiles. By way of example, if the circuit is designed using an integral type remaining capacity meter, to be able to grasp the charging situations by the regenerated electric power, when the regeneration brake is continuously effected as is encountered in the condition of running over a long downward slope, the storage cells can be charged at the beginning of regeneration and, even after the storage cells have been fully charged with the regenerated electric power, the operation can be automatically switched to the consumption mode by the motor driving circuit. Therefore, the regenerative braking ability can be prevented from deteriorating.

With the regeneration brake for electric automobiles of this embodiment, the motor driving circuit intrinsically loaded on the electric automobile is controlled to consume electric power by itself so that the motor driving circuit can perform the operation of consuming electric power when the electric power cannot be returned to the battery. Therefore, the regenerative braking forces can surely be maintained and reliability of the regeneration brake can be improved regardless of how the battery is consumed. In other words, electric power can be consumed by controlling the motor driving circuit which is usually loaded on the electric automobile, without the need of a dedicated circuit which is required only to consume surplus electric power. As a result, the weight and the space additionally required for the dedicated circuit are no longer necessary, complication of the brake structure can be prevented, and the cost can be cut down. Further, since the switching devices of the motor driving circuit are intrinsically formed of large-sized devices for the purpose of motor driving and provided with means for ensuring a sufficient degree of heat radiation, the motor driving circuit can double as a circuit for consuming surplus electric power with no problem.

A protective device according to the present invention will be described below in connection with an embodiment shown in Figs. 8 to 10. A protective device of this embodiment is intended to not only add a new preliminary stop operation to the alarm/stop operation of a conventional protective device, but also to cancel the stop operation effected for the first time by providing a cancel switch to override the preliminary stop operation. This embodiment provides a motor protective device for monitoring an operating temperature of the travelling motor, issuing an alarm to the driver and effecting the operation to stop the motor. Also, the protective device of this embodiment is designed to have a vibrating alarm, rather than a visual alarm, so that the alarm is surely transmitted to the driver.

More specifically, as shown in Fig. 8, when the temperature of the travelling motor 7 is gradually increased because of its continued operation while the electric motorcycle is travelling, the conventional protective device is designed to first issue an alarm to the driver at the time T1 the motor temperature reaches L1, and then immediately stop the motor at the time T2. By contrast, in the protective device of this embodiment, the motor is stopped likewise at the time T2, but the motor stop operation effected by the protective device can be overridden by operating a cancel switch, enabling the motor to be further driven until the succeeding time of T3. Then, at the time of T3, the motor is completely stopped with no possibility of cancellation.

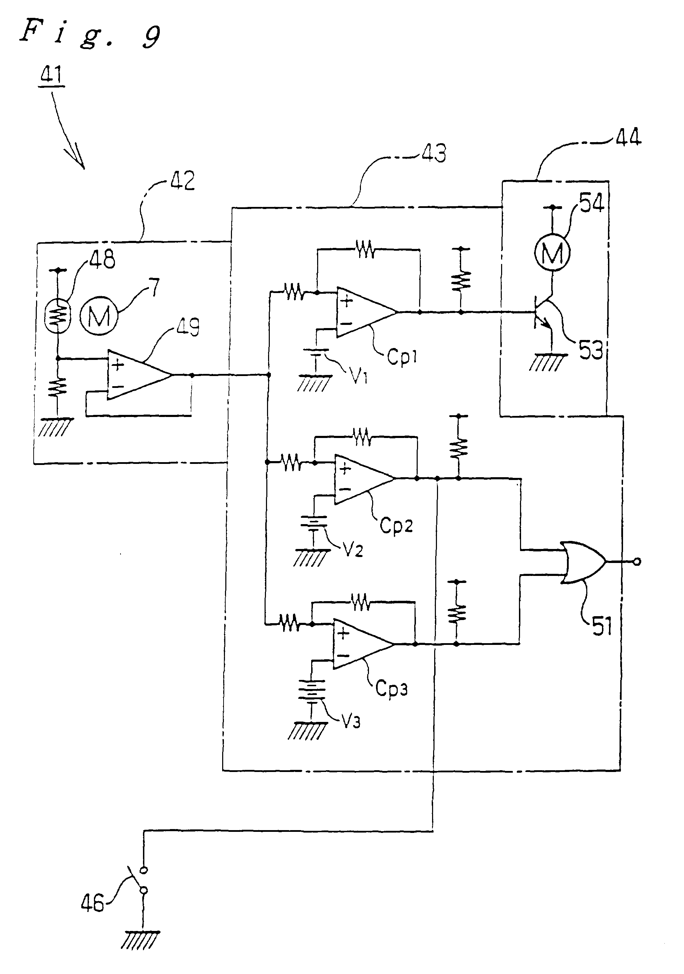

A protective device 41 for electric automobiles of this embodiment comprises, as shown in Fig. 9, a temperature detector 42 associated with the travelling motor 7, a comparison/determination circuit 43 for, based on detected temperature data, comparing the temperature data with three reference levels and determining the motor condition, a vibrating alarm unit 44 and a motor stop circuit (not shown) downstream of the comparison/determination circuit 43 which are operated by respective determination signals, and a cancel switch 46 for cancelling a stop signal issued for the first time.

The temperature detector 42 comprises a temperature sensor 48 disposed in the travelling motor 7 and a buffer circuit 49 for accumulating an output of the temperature sensor 48, and is connected to the comparison/determination circuit 43. The temperature sensor 48 is formed of a thermistor for converting temperature into a resistance value. A change in the voltage value across a resistor connected in series to the thermistor is taken as an accurate voltage value through the buffer circuit 49 comprising an operational amplifier with maximum negative feedback. Thus, the temperature detector 42 measures, by the temperature sensor, an increase in the motor temperature with operation of the travelling motor 7 while the electric motorcycle is travelling, and outputs the measured motor temperature, as a voltage value, to the comparison/determination circuit 43 in the downstream stage.

The comparison/determination circuit 43 comprises three comparators Cp1, Cp2, Cp3 the positive input terminals of which are connected in parallel to an output line of the temperature detector 42, and a logical OR circuit 51 the input terminals of which are connected respectively to output terminals of the comparators Cp2, Cp3. The vibrating alarm unit 44 is connected downstream of the comparator Cp1, and the motor stop circuit is connected downstream of the comparators Cp2, Cp3 through the OR circuit 51. Incidentally, denoted by 53 is a transistor which turns on in response to an output from the comparator Cp1. Upon turning-on of the transistor 53, a driving current is applied to a drive motor 54 of the vibrating alarm unit 44, described later, for operating it.

For the comparators Cp1, Cp2, Cp3, respective predetermined comparative reference values are set beforehand. By comparing the reference values and the voltage value representing the measured temperature, the comparators Cp1, Cp2, Cp3 determine the condition of operating temperature of the travelling motor 7 and issue an alarm to the driver or stop the operation of the motor 7. Specifically, for the comparators Cp1, Cp2, Cp3, voltage comparative values respectively corresponding to the temperature levels L1, L2, L3 in Fig. 8 are set beforehand by supply voltages V1, V2, V3 that are each supplied from a single power supply provided for each comparator Cp. Therefore, when the comparison made by the comparator Cp is satisfied, an output signal taken from its output terminal assumes a high level, thereby operating the vibrating alarm unit 44 for issuing an alarm to the driver or the motor stop circuit for stopping the operation of the travelling motor 7, which is connected downstream of that comparator Cp.

The logical OR circuit 51 has input terminals connected respectively to the output terminals of the comparators Cp2, Cp3, and an output terminal connected to the motor stop circuit. Therefore, in accordance with the logical OR condition of the OR circuit 51, the motor stop circuit in the downstream stage is operated by a high-level signal output from one of the comparators Cp2, Cp3 connected upstream of the OR circuit 51.

Further, the cancel switch 46 has one terminal connected to a connecting line between the comparator Cp2 and the logical OR circuit 51, and the other ground terminal. Accordingly, when the cancel switch 46 is turned on, the high-level signal from the comparator Cp2 is passed to the ground and output to neither the logical OR circuit 51 nor the motor stop circuit. This means that the motor stop operation effected for the first time upon satisfaction of the comparison made by the comparator Cp2 is overridden. Also, by turning on the cancel switch 46 in advance, it is possible to always cancel the stop operation effected for the first time and render operation of the protective device to be in the same manner as in conventional device.

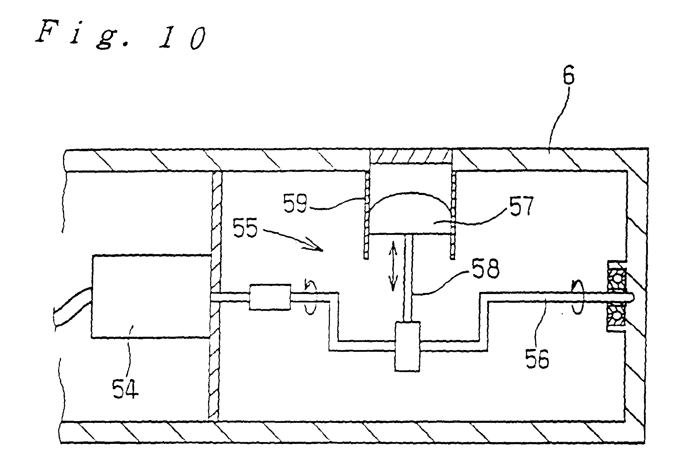

The vibrating alarm unit 44 connected to the comparator Cp1 comprises, as shown in Fig. 10, a drive motor 54 fixedly disposed in an accelerator grip of the steering handle 6, and a mechanical vibrating mechanism 55 driven by the motor 54 and also being housed in the accelerator grip.

More specifically, the drive motor 54 is supplied with a driving current in response to a high-level output signal of the comparator Cp1 and starts rotating. The vibrating mechanism 55 comprises a crankshaft 56 disposed to extend in the longitudinal direction of the accelerator grip, and having one end which is coaxially coupled to an output shaft of the drive motor 54 and the other end which is supported by a distal end of the accelerator grip, a crank rod 58 having a base end coupled to an intermediate bent portion of the crankshaft 56 and a tip end coupled to a weight 57, and a cylinder 59 fixed to the accelerator grip and holding the weight 57 in a reciprocally movable manner. Therefore, when the drive motor 54 is energised to rotate the crankshaft 56, the weight 57 is reciprocally moved in the vertical direction in Fig. 10 to vibrate the entire grip to issue an alarm to the driver through vibrations of the grip.

The operation of the thus-constructed protective device 41 of this embodiment will be described below.

First, when the temperature of the travelling motor 7 is low and the temperature detected voltage value V from the temperature detector 42 is also low, the comparisons made by all the comparators Cp of the comparison/determination circuit 43 are not satisfied and the output of each comparator Cp is held at a low level. Therefore, the vibrating alarm unit 44 and the motor stop circuit connected to the comparators is kept in an off state and not operated.

Then, when the motor temperature is raised, for example, after travelling continuously for a long time, and the temperature detected voltage value V reaches the alarm level V1, the comparison made by the comparator Cp1 is satisfied and the comparator Cp1 outputs a high-level signal instructing the start of operation of the vibrating alarm unit 44 in the downstream stage. The vibrating alarm unit 44 vibrates the entire grip to surely inform the driver of an alarm indicating that the operating temperature of the motor 7 is raised and travelling of the electric motorcycle should be stopped.

If the driver continues travelling from the above condition and the voltage value representing the motor temperature is further raised with the continued motor operation in excess of the first stop level V2, the comparison made by the second comparator Cp2 is satisfied and the comparator Cp2 outputs a high-level signal indicating the start of operation of the motor stop circuit through the logical OR circuit 51. The operation of the motor 7 is thereby stopped to stop travelling of the electric motorcycle.

In this condition, by turning on the cancel switch 46, the high-level output signal of the comparator Cp2 is passed to ground, enabling the operation of the motor stop circuit to be cancelled. With the provision of the cancel switch 46, therefore, it is possible to override the instruction from the protective device to stop travelling of the electric motorcycle, and allow it to continue travelling. Also, if the driver turns off the cancel switch 46 at his discretion before reaching the third stop level, the motor operation is stopped and the electric motorcycle is also stopped.

Furthermore, if the driver continues travelling from the above condition and the voltage value representing the motor temperature exceeds the second stop level V3 with a continued increase in the motor temperature, the comparison made by the third comparator Cp3 is satisfied.

Then, the comparator Cp3 outputs a high-level signal indicating the start of operation of the motor stop circuit through the logical OR circuit 51. The operation of the motor 7 is thereby stopped to stop travelling of the electric motorcycle with no possibility of cancellation.

While the protective device of this embodiment uses a dedicated circuit for comparing and determining the temperature condition during the motor operation, it is also possible to, as with the above embodiment, input the sensor and switch signals to the control circuit, and carry out comparison and determination using a dedicated program to instruct any operation of issuing an alarm, stopping the motor or cancelling the stop operation.

While this embodiment has been described in connection with the protective device adapted for detection of the motor temperature, the present invention is not limited to the illustrated embodiment, but can also be applied to protective devices adapted for measurement of overheat, excessive voltage, voltage drop, etc. of equipment. In other words, the present invention is applicable to various protective devices which are operated to detect abnormality of target equipment, issue an alarm and stop operation of the equipment based on comparison and determination between a measured value of the parameter to be monitored and a reference value.

With the protective device for electric automobiles of this embodiment, as described above, new preliminary stop operation is added to the alarm/stop operation of a conventional protective device, and a cancel switch is provided to override the preliminary stop operation for cancelling the stop operation effected for the first time by the protective device. Therefore, if the equipment is continuously operated in disregard of an alarm issued by the protective device and the operation of the equipment is stopped for the first time by the protective device, the stop operation by the protective device can be cancelled, allowing the driver to continue the operation of the equipment so that the equipment is prevented from being stopped in unwanted situations. For example, when the protective device is to monitor a temperature condition of the travelling motor, the automobile can be prevented from stalling in a place where it should not be stopped, such as an intersection or a railroad crossing. In this respect, since the motor operation ability is not lowered in the stage of alarm/stop operation, the travelling speed is maintained and the driver can quickly move the automobile away from the improper place, thus improving safety.

Additionally, since an alarm issued by the protective device is informed to the driver through vibrations of the vibrating alarm unit, the alarm can surely be transmitted to the driver of even an electric motorcycle such as a scooter regardless of traffic situations in the surroundings and/or running conditions, resulting in improved safety.

As described herein above, according to the travelling control apparatus for electric automobiles of the present invention, since the duty ratio is increased depending on a reduction in the battery terminal voltage based on both the terminal voltage and the opening degree of the accelerator so as to supply the same effective voltage to the motor for maintaining the motor output power at a constant value regardless of how the battery is consumed, the driver can always perceive a steady agreeable travelling feeling.

According to the regeneration brake for electric automobiles of the present invention, since the motor driving circuit intrinsically loaded on the electric automobile is controlled to consume electric power by itself so that the motor driving circuit can perform the operation of consuming electric power when the electric power cannot be returned to the battery, the regenerative braking forces can surely be maintained and reliability of the regeneration brake can be improved regardless of how the battery is consumed. In other words, since electric power can be consumed by controlling the motor driving circuit which is usually loaded on the electric automobile, with no need of providing a dedicated circuit which is required only to consume surplus electric power, the weight and the space additionally required for the dedicated circuit are no longer necessary, complication of the brake structure can be prevented, and the cost can be cut down. Further, since the switching devices of the motor driving circuit are intrinsically formed of large-sized devices for the purpose of motor driving and provided with means for ensuring a sufficient degree of heat radiation, the motor driving circuit can double as a circuit for consuming surplus electric power with no problem.

According to the protective device for electric automobiles of the present invention, since new preliminary stop operation is added to the alarm/stop operation of a conventional protective device, and the cancel switch is provided to override the preliminary stop operation for cancelling the stop operation effected for the first time by the protective device, if the equipment is continuously operated in disregard of an alarm issued by the protective device and the operation of the equipment is stopped for the first time by the protective device, the stop operation by the protective device can be cancelled, allowing the driver to continue the operation of the equipment so that the equipment is prevented from being stopped in unwanted situations. For example, when the protective device is to monitor a temperature condition of the travelling motor, the automobile can be prevented from stalling in a place where it should not be stopped, such as an intersection or a railroad crossing. In this respect, since the motor operation ability is not lowered in the stage of alarm /stop operation, the travelling speed is maintained and the driver can quickly move the automobile away from the improper place for improved safety.

Additionally, since an alarm issued by the protective device is informed to the driver through vibrations of the vibrating alarm unit, the alarm can surely be transmitted to the driver of even an electric motorcycle such as a scooter regardless of traffic situations in the surroundings and/or running conditions, resulting in improved safety.

As set forth above, the present invention can provide the travelling control apparatus by which the duty ratio in consideration of how the storage cells are consumed is set to ensure a steady travelling feeling, the regeneration brake which can produce stable braking forces regardless of how the storage cells are consumed, and the protective device by which a plurality of operation stop levels are set to be able to cancel the stop operation effected, at least for the first time and which ensures reliable alarming. As a result, overall travelling performance of electric automobiles is improved.

The aforegoing description has been given by way of example only and it will be appreciated by a person skilled in the art that modifications can be made without departing from the scope of the present invention.

## Claims

1. A control apparatus for an electric automobile (1) having a motor (7), an accelerator, and storage cells (11) for supplying electric power, the control apparatus comprising:
a travelling control apparatus comprising a motor driving circuit (13) for controlling rotation of the motor (7) by performing chopper control, and a control circuit (14) for setting the duty ratio for chopper control in accordance with the condition of the accelerator;
a regeneration brake comprising a motor driving circuit (13) for acting as a dynamo and returning electric power regenerated by the motor (7) to the storage cells (11); and
a protective device comprising an alarm (44), a detector (42) for detecting changes in a physical variable due to operation of loaded equipment and outputting a detection signal representative of such a change, and a control circuit (43) activating the alarm (44) when the detection signal reaches a predetermined alarm level (V1) and for stopping the equipment when the detection signal reaches a predetermined stop level (V2);
characterised in that:
the motor driving circuit (13) of the travelling control apparatus further adjusts the duty ratio for chopper control, in accordance with terminal voltage of the storage cells (11), such that a constant effective voltage for application to the motor (7) is maintained;
the motor driving circuit (13) of the regeneration brake determines the remaining capacity of the storage cells (11) and the regeneration brake further comprises a control circuit (14) for controlling its motor driving circuit (13) in accordance with a comparison between the electric power regenerated by the motor (7) and the remaining capacity of the storage cells (11), such that any surplus regenerated electric power is consumed by its motor driving circuit (13); and
the protective device further comprises means (46) for overriding the stopping of the equipment when the detection signal reaches the predetermined stop level (V2) and its control circuit (43) is arranged to stop the equipment when the detection signal reaches a further predetermined stop level (V3).

2. A travelling control apparatus for an electric automobile (1) having a motor (7), an accelerator, and storage cells (11) for supplying electric power, the travelling control apparatus comprising:
a motor driving circuit (13) for controlling rotation of the motor (7) by performing chopper control; and
a control circuit (14) for setting the duty ratio for chopper control in accordance with the condition of the accelerator;
characterised in that the motor driving circuit (13) further adjusts the duty ratio for chopper control, in accordance with terminal voltage of the storage cells (11), such that a constant effective voltage for application to the motor (7) is maintained.

3. An apparatus as claimed in claim 2, wherein the control circuit (14) sets the duty ratio based on stored information on the relationship between duty ratio and the degree of opening of the accelerator for various storage cell terminal voltages.

4. An apparatus as claimed in claim 2, wherein the control circuit (14) sets the duty ratio based on stored information on the relationship between the degree of opening of the accelerator and storage cell terminal voltage for various duty ratios.

5. An apparatus as claimed in claim 4, wherein each stored duty ratio has associated with it a range of values for the degree of opening of the accelerator and the control circuit (14) defines each range by an upper or lower limit.

6. A regeneration brake for an electric automobile (1) having a motor (7) and storage cells (11) for supplying electric power, the brake comprising:
a motor driving circuit (13) for controlling rotation of the motor (7), acting as a dynamo and returning electric power regenerated by the motor (7) to the storage cells (11);
characterised in that:
the motor driving circuit (13) determines the remaining capacity of the storage cells (11); and
the regeneration brake further comprises a control circuit (14) for controlling the motor driving circuit (13) in accordance with a comparison between the electric power generated by the motor (7) and the remaining capacity of the storage cells (11), such that any surplus regenerated electric power is consumed by the motor driving circuit (13).

7. A regeneration brake as claimed in claim 6, wherein the remaining capacity of the storage cells (11) is determined by direct measurement of the terminal voltage of the storage cells (11).

8. A regeneration brake as claimed in claim 6 or 7, wherein the motor driving circuit (13) comprises a resistor (36) for measuring the charging/discharging current to and from the storage cells (11) from which the control circuit (14) can ascertain the remaining capacity of the storage cells (11).

9. A regeneration brake as claimed in any of claims 6 to 8, wherein the motor driving circuit (13) comprises a transistor-diode arrangement (Ta-Tc, Da-Dc) and the control circuit (14) controls the gates of the transistors according to the comparison between the electric power generated by the motor (7) and the remaining capacity of the storage cells (11) such that current flowing between the drain and source of the appropriate transistor is converted into heat for consumption when there is a surplus of regenerated electric power.

10. A protective device for an electric automobile (1) comprising:
an alarm (44);
a detector (42) for detecting changes in a physical variable due to operation of loaded equipment and outputting a detection signal representative of such a change; and
a control circuit (43) for activating the alarm (44) when the detection signal reaches a predetermined level (V1) and for stopping the equipment when the detection signal reaches a predetermined stop level (V2);
characterised in that:
the protective device further comprises means (46) for overriding the stopping of the equipment when the detection signal reaches the predetermined stop level (V2); and the control circuit (43) is arranged to stop the equipment when the detection signal reaches a further predetermined stop level (V3).

11. A protective device as claimed in claim 10, wherein the alarm is a vibrating alarm for vibrating a handle (6) of the electric automobile (1).

12. A control apparatus for an electric automobile (1) comprising a travelling control apparatus as claimed in any of claims 2 to 5 and/or a regeneration brake as claimed in any of claims 6 to 9 and/or a protective device as claimed in claim 10 or 11.
